# EUROPEAN PATENT APPLICATION

(11) **EP 2 209 320 A1**
(43) Date of publication of application: **21.07.2010**
(21) Application number: 08843184.6
(22) Date of filing: 10.10.2008
(51) Int. Cl.: H04N 13/00

(54) **VIDEO ENCODING DECODING METHOD AND DEVICE AND VIDEO CODEC**

(30) Priority: 17.10.2007 CN 200710175991
(71) Applicant: Huawei Device Co., Ltd., Longgang District Shenzhen Guangdong 518129 (CN)
(72) Inventor: FANG, Ping, Shenzhen Guangdong 518129 (CN); WANG, Jing, Shenzhen Guangdong 518129 (CN); LIU, Yuan, Shenzhen Guangdong 518129 (CN); LI, Kai, Shenzhen Guangdong 518129 (CN)
(74) Representative: Charles, Glyndwr
(86) International application number: PCT/CN2008/072653
(87) International publication number: WO 2009/052730

(57) **Abstract**

A video encoding decoding method and device and a video codec are provided. The video encoding method includes the following steps. A first view picture is basic-layer encoded as a reference view picture, prediction information is extracted in combination with a second view picture, and the second view picture is re-created. A residual value is calculated according to a re-created second view picture and the original second view picture. When the residual value is greater than a threshold, both the residual value and the prediction information are enhanced-layer encoded simultaneously; otherwise, only the prediction information is enhanced-layer encoded. Encoded information is obtained by multiplexing the enhanced-layer encoding with the basic-layer encoding of the first video picture. The video decoding method includes the following steps. After de-multiplex, basic-layer encoded information and enhanced-layer encoded information are decoded respectively to obtain a first view picture, prediction information, and a residual value, and then a second view picture is re-created. The embodiments of the invention can realize the effective compression of stereo video data, reduce an encoding complexity, and are compatible with the conventional two dimensional displaying, so as to correctly and easily re-create a stereo view picture.

## Description

The application claims the benefit of priority to China Patent Application No. 200710175991.7, filed on October 17, 2007, and entitled "VIDEO ENCODING DECODING METHOD AND DEVICE AND VIDEO CODEC", which is incorporated herein by reference in its entirety.

### FIELD OF THE TECHNOLOGY

The present invention relates to the field of video technology, and more particularly to a video encoding decoding method and device and a video codec.

### BACKGROUND OF THE INVENTION

A conventional two dimensional video is a carrier for plane information, which only shows a content of a scene, instead of depth information of the scene. When viewing the surrounding world, people not only view a width and a height of an object, but also obtain a depth of the object, and determine a distance between the objects or between the viewer and the object. The reason of generating the three dimensional visual sense characteristic lies in that, when two eyes of a person view the object simultaneously, due to a distance between visual axes of the two eyes, the left eye and the right eye receive different visual pictures when viewing an object with a certain distance, and the two pieces of different picture information are integrated, so as to generate a stereo sense in the brain of the person. Along with the development of the video technology, people do not satisfy with the video sense from the two dimensional video, and further pursue better user experience and the sense of being personally on the scene. Therefore, a stereo video technology becomes one of the key technologies for realizing the target.

In the stereo video technology, based on a principle of a parallax between the two eyes of the human being, two pictures of the same scene are obtained by cameras from different angles, and the two pictures are simultaneously or successively displayed on a screen, such that the two eyes respectively view the two pictures to obtain the stereo sense. Therefore, as compared with the conventional two dimensional video, the stereo video has two video streams, and under a situation of ensuring a picture resolution without considering the compressed encoding, the data flow to be transmitted by the stereo video is two times that of the two dimensional video. The increasing of the data flow brings an extremely great challenge for storage and transmission, and the problem cannot be solved by only improving a storage capacity and a network bandwidth, so it is necessary to design a high-efficiency encoding method for compressing the stereo video data.

When the user views the stereo video, viewing effects obtained at different positions relative to the display are quite different, such that it is a problem to be urgently solved in the existing stereo video technology how to make the user obtain the optimal viewing effect at any position. In addition, the development of the stereo video technology needs a transition procedure, so the stereo encoding method needs to be compatible with the conventional two dimensional displaying.

In the prior art, the method for encoding and decoding the stereo video is described as follows.
(1) A left view picture and a right view picture of the stereo video are interleaved to a picture at an encoding end, and the picture is encoded by adopting a standard format, for example, a motion picture expert group (MPEG) format, and is output to a transmitting/recording unit. Encoded information is decoded at a decoding end, so as to recover the left view picture and the right view picture for being displayed.

Disadvantages of the encoding and decoding method lie in that, the encoding end needs to process the left view picture and the right view picture simultaneously, thus having a large encoding and decoding complexity for the conventional two dimensional displaying only needs one picture, such that it is not applicable to the two dimensional displaying; further, the position of the user is not considered on a receiving end, and the user cannot obtain the optimal viewing effect at any position.
(2) One of the left video stream and the right video stream is selected as a reference video, and the reference video is encoded by adopting a standard encoding manner. For the other video stream, two difference value predictions may be simultaneously adopted, the prediction having a
better effect is selected from the two predictions and encoded, or a prediction and an average of the two predictions are randomly selected, or the two predictions are used according to a preset weight assignment. For the other video stream, a phase difference prediction and a motion compensation prediction may also be adopted, the two predictions are averagely used, or the two predictions are used according to a preset weight assignment.

Disadvantages of the encoding method lie in that, as the several prediction methods are adopted, it is inconvenient to recreate the stereo view picture for the viewing position of the user on the receiving end, and the user cannot obtain the optimal viewing effect at any position.

### SUMMARY OF THE INVENTION

The present invention is directed to a video encoding method, a video encoding device, and an encoder, so as to realize an effective compression of stereo video data, and reduce an encoding complexity, thereby correctly and easily re-creating a stereo view picture.

The present invention is further directed to a video decoding method, a video decoding device, and a decoder, for correctly and easily re-creating a stereo view picture.

In an embodiment, the present invention provides a video encoding method, which includes the following steps.

A first view picture is basic-layer encoded as a reference view picture, and prediction information is extracted from the first view picture in combination with a second view picture.

The second view picture is re-created according to the basic-layer encoding and the prediction information.

A residual value is calculated according to the re-created second view picture and the original second view picture.

The residual value and the prediction information are simultaneously enhanced-layer encoded, when the residual value is greater than a threshold; otherwise, only the prediction information is enhanced-layer encoded.

Encoded information is obtained by multiplexing the enhanced-layer encoding with the basic-layer encoding of the first video picture.

In an embodiment, the present invention provides a video encoding device, which includes a basic-layer encoding/prediction module, a re-creating module, a residual value calculation module, an enhanced-layer encoding module, and a multiplexing module.

The basic-layer encoding/prediction module is adapted to basic-layer encode a first view picture as a reference view picture, and extract prediction information from the first view picture in combination with a second view picture;

The re-creating module is adapted to re-create the second view picture according to the basic-layer encoding and the prediction information.

The residual value calculation module is adapted to calculate a residual value according to the re-created second view picture and the original second view picture.

The enhanced-layer encoding module is adapted to enhanced-layer encode the prediction information, and simultaneously enhanced-layer encode the residual value and the prediction information, when the residual value is greater than a threshold.

The multiplexing module is adapted to multiplex the enhanced-layer encoding with the basic-layer encoding of the first video picture, so as to obtain encoded information.

In an embodiment, the present invention provides a video decoding method, which includes the following steps.

Received encoded information is de-multiplexed, so as to obtain basic-layer encoded information and enhanced-layer encoded information.

The basic-layer encoded information is decoded, so as to obtain a first view picture as a reference view picture.

The enhanced-layer encoded information is decoded, so as to obtain prediction information, or the prediction information and a residual value.

A second view picture is re-created according to the first view picture, the prediction information, and the residual value.

In an embodiment, the present invention provides a video decoding device, which includes a de-multiplexing module, a decoding module, an obtaining module, and a re-creating module.

The de-multiplexing module is adapted to de-multiplex received encoded information, so as to obtain basic-layer encoded information and enhanced-layer encoded information.

The decoding module is adapted to decode the basic-layer encoded information, so as to obtain a first view picture as a reference view picture.

The obtaining module is adapted to decode the enhanced-layer encoded information, so as to obtain prediction information, or the prediction information and a residual value.

The re-creating module is adapted to re-create a second view picture according to the first view picture, the prediction information, and the residual value.

In an embodiment, the present invention provides a video encoder, which includes a basic-layer encoding unit, a prediction information extraction unit, a re-creating unit, a residual value calculation unit, a comparison unit, an enhanced-layer encoding unit, and a multiplexing unit.

The basic-layer encoding unit is adapted to basic-layer encode a first view picture as a reference view picture.

The prediction information extraction unit is adapted to extract prediction information according to the basic-layer encoded and locally decoded first view picture and a second view picture.

The re-creating unit is adapted to re-create the second view picture according to the basic-layer encoded and locally decoded first view picture and the prediction information.

The residual value calculation unit is adapted to calculate a residual value according to the re-created second view picture and the original second view picture.

The comparison unit is adapted to compare the residual value with a threshold, and output the residual value greater than the threshold.

The enhanced-layer encoding unit is adapted to enhanced-layer encode the prediction information output from the prediction information extraction unit and the residual value output from the comparison unit.

The multiplexing unit is adapted to multiplex the enhanced-layer encoding with the basic-layer encoding of the first video picture, so as to obtain encoded information.

In an embodiment, the present invention provides a video decoder, which includes a de-multiplexing unit, a basic-layer decoding unit, an enhanced-layer decoding unit, and a re-creating unit.

The de-multiplexing unit is adapted to de-multiplex received encoded information, so as to obtain basic-layer encoded information and enhanced-layer encoded information.

The basic-layer decoding unit is adapted to decode the basic-layer encoded information, so as to obtain a first view picture as a reference view picture.

The enhanced-layer decoding unit is adapted to decode the enhanced-layer encoded information, so as to obtain prediction information, or the prediction information and a residual value.

The re-creating unit is adapted to re-create a second view picture according to the first view picture, the prediction information, and the residual value.

In the video encoding method, the video encoding device, and the encoder according to the present invention, the first view picture is selected as the reference view picture and is basic-layer encoded, other information of a stereo video is enhanced-layer encoded, thereby realizing the effective compression of the stereo video data, and reducing the encoding complexity. For a conventional two dimensional displaying, only basic-layer encoded information is extracted, so it is compatible with the two dimensional displaying function, thereby correctly and easily re-creating the stereo view picture.

In the video decoding method, the video decoding device, and the decoder according to the present invention, the first view picture as the reference view picture is obtained by decoding the basic-layer encoded information, so it is compatible with the two dimensional displaying function. The prediction information, or the prediction information and the residual value are obtained by decoding enhanced-layer encoded information, and the second view picture is re-created, thereby correctly and easily recreating the stereo view picture through the first view picture obtained by decoding and the re-created second view picture.

### BRIEF DESCRIPTION OF THE DRAWINGS

FIG. 1 is a flow chart of a video encoding method according to an embodiment of the present invention;
FIG. 2 is a flow chart of a video decoding method according to an embodiment of the present invention;
FIG. 3 is a schematic view of relations among a parallax, a depth of field, and a user viewing position in the video decoding method according to the embodiment of the present invention;
FIG. 4 is a schematic view of a video encoder according to an embodiment of the present invention; and
FIG. 5 is a schematic view of a video decoder according to an embodiment of the present invention.

### DETAILED DESCRIPTION OF THE EMBODIMENTS

Technical solutions of the present invention are further described in detail with reference to accompanying drawings and embodiments.

An embodiment of a video encoding method is described as follows.

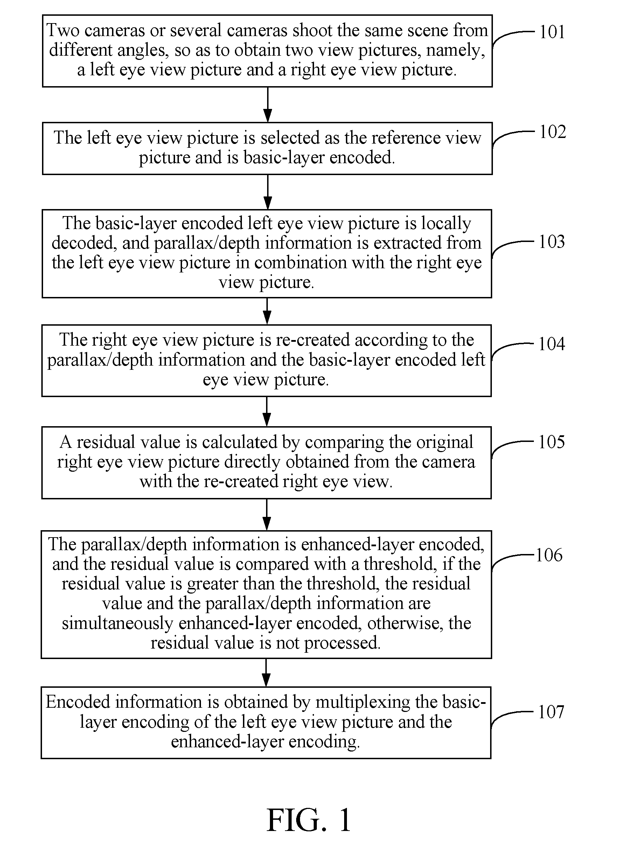

FIG. 1 is a flow chart of a video encoding method according to an embodiment of the present invention. Referring to FIG. 1, the method includes the following steps.

In Step 101, two cameras or several cameras shoot the same scene from different angles, so as to obtain two view pictures, namely, a left eye view picture and a right eye view picture.

In Step 102, a view picture is randomly selected from the left eye view picture and the right eye view picture as a reference view picture and is basic-layer encoded, in which the left eye view picture may be selected, or the right eye view picture may be selected, and in this embodiment, the left eye view picture is selected as the reference view picture.

In Step 103, the basic-layer encoded left eye view picture is locally decoded, and prediction information is extracted from the left eye view picture in combination with the right eye view picture, in which the prediction information may be parallax/depth information, or motion vector information, and in this embodiment, the prediction information is the parallax/depth information.

In Step 104, the right eye view picture is re-created according to the basic-layer encoded left eye view picture and the parallax/depth information.

In Step 105, a residual value is calculated by comparing the original right eye view picture directly obtained from the camera with the re-created right eye view picture.

In Step 106, the parallax/depth information is enhanced-layer encoded, and the residual value is compared with a threshold, if the residual value is greater than the threshold, the residual value and the parallax/depth information are simultaneously enhanced-layer encoded; otherwise, the residual value is not processed, that is, only the parallax/depth information is enhanced-layer encoded.

The threshold may be determined according to an existing encoding standard, or according to a stereo video transmission experiment, the threshold determined through the experiment ensures that an excellent stereo display effect may be obtained even the residual value is not processed.

In Step 107, encoded information is obtained by multiplexing the basic-layer encoding of the left eye view picture and the enhanced-layer encoding.

In this embodiment, both the basic-layer encoding and the enhanced-layer encoding are discrete cosine transform (DCT) encodings having motion compensation.

In this embodiment, the left eye view picture is selected and is basic-layer encoded, other information of the stereo video is enhanced-layer encoded, further, when the residual value is smaller than the threshold, the residual value needs not to be processed, thereby realizing an effective compression of stereo video data, and reducing an encoding complexity. For a conventional two dimensional displaying, only basic-layer encoded information is extracted, so it is compatible with a two dimensional displaying function, thereby correctly and easily re-creating the stereo view picture.

An embodiment of a video encoding device is described as follows.

The video encoding device of this embodiment particularly includes a basic-layer encoding/prediction module, adapted to basic-layer encode a left eye view picture as a reference view picture, and extract prediction information from the left eye view picture in combination with a right eye view picture; a re-creating module, adapted to re-create the right eye view picture according to the basic-layer encoding and the prediction information; a residual value calculation module, adapted to calculate a residual value according to the re-created right eye view picture and the original right eye view picture; an enhanced-layer encoding module, adapted to enhanced-layer encode the prediction information, and simultaneously enhanced-layer encode the residual value and the prediction information when the residual value is greater than a threshold; and a multiplexing module, adapted to multiplex the enhanced-layer encoding with the basic-layer encoding of the first video picture, so as to obtain encoded information.

In this embodiment, the left eye view picture is basic-layer encoded as the reference view picture by the basic-layer encoding/prediction module, and other information of the stereo video is enhanced-layer encoded by other modules, thereby realizing an effective compression of stereo video data, and reducing an encoding complexity. For a conventional two dimensional displaying, only basic-layer encoding information is extracted, so it is compatible with a two dimensional displaying function, thereby correctly and easily re-creating the stereo view picture.

An embodiment of a video decoding method is described as follows.

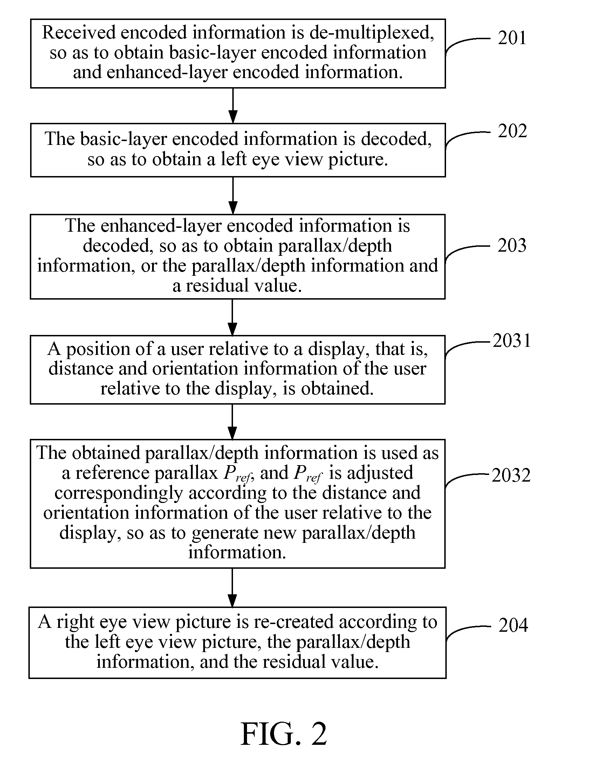

FIG. 2 is a flow chart of a video decoding method according to an embodiment of the present invention. Referring to FIG. 2, the decoding method of this embodiment is performed for the encoding method according to the present invention, and includes the following steps.

In Step 201, received encoded information is de-multiplexed, so as to obtain basic-layer encoded information and enhanced-layer encoded information.

In Step 202, the basic-layer encoded information is decoded, so as to obtain a left eye view picture as a reference view picture.

In Step 203, the enhanced-layer encoded information is decoded, so as to obtain parallax/depth information, or the parallax/depth information and a residual value.

In Step 204, a second view picture is re-created according to the basic-layer decoded left eye view picture, the parallax/depth information, and the residual value.

When prediction information in the encoded information is motion vector information, the prediction information obtained by decoding is also the motion vector information.

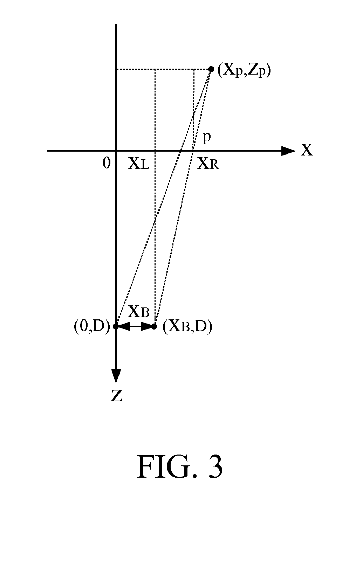

For the same scene, when a user views from different positions, parallaxes formed by the same scene in left and right eyes of the user are different, thus having different viewing effects. FIG. 3 is a schematic view of relations among a parallax, a depth of field, and a user viewing position in the video decoding method according to the embodiment of the present invention. Referring to FIG. 3, a coordinate system is established according to a position of the user, in which an *x* axis represents an imaging plane, a *z* axis represents depth information, that is, a distance of a target in the scene relative to the imaging plant, (*x_{P}*, *z_{P}*) represents coordinates of the target point in the scene, *x_{L}* represents an *x* axis coordinate value of the target point on the imaging plane relative to the left eye, *x_{R}* represents an *x* axis coordinate value of the target point on the imaging plane relative to the right eye, *p* represents a parallax between the two eyes (i.e. a difference between *x_{L}* and *x_{R}*), (0, *D*) represents coordinates of the left eye of the viewer, (*x_{B},* D) represents coordinates of the right eye of the viewer, and *x_{B}* equals to a width between the two eyes. According to geometrical relations, the following formula may be obtained.

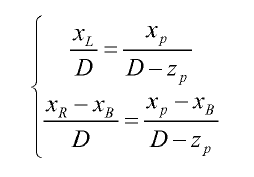

A formula may be obtained by deducting the above formula.

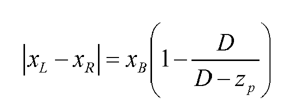

That is,

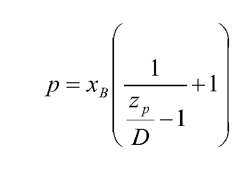

When the position of the user is moved along the x axis, the above formula may still be deduced according to the above principle, therefore, the parallax *p* between the two eyes is relevant to a vertical distance *D* from the user to the imaging plane, that is, the parallax between the two eyes is relevant to distance and orientation information of the user relative to a display. In order to make the user obtain the optimal stereo viewing effect at any position, the method includes the following steps between Steps 203 and 204.

In Step 2031, the orientation information of the user relative to the display is obtained, so as to calculate the vertical distance *D* from the user to the imaging plane.

In Step 2032, the parallax/depth information obtained in Step 203 is used as a reference parallax *p_{ref}*, and *p_{ref}* is adjusted correspondingly according to the vertical distance D from the user to the imaging plane, so as to generate new parallax/depth information *p*'.

Further, in Step 204, particularly, the right eye view picture is re-created according to the left eye view picture, the new parallax/depth information *p*', and the residual value.

In this embodiment, the orientation information of the user relative to the display may be actively obtained by a video camera apparatus, or may be passively received from the user.

In this embodiment, the basic-layer encoded information is obtained, for a conventional two dimensional displaying, a two dimensional view picture may be obtained by directly decoding the basic-layer encoded information, so it is compatible with a two dimensional displaying function. The right eye view picture is re-created according to the basic-layer encoded information and the parallax/depth information obtained after the enhanced-layer decoding, or the parallax/depth information and the residual value, thereby correctly and easily re-creating the stereo view picture by utilizing the left eye view picture obtained by decoding and the re-created right eye view picture. The new parallax/depth information is generated according to the orientation information of the user relative to the display, and the stereo view picture is re-created according to the new parallax/depth information, such that the user may obtain the optimal stereo viewing effect at any position.

An embodiment of a video decoding device is described as follows.

The video decoding device of this embodiment particularly includes a de-multiplexing module, adapted to de-multiplex received encoded information, so as to obtain basic-layer encoded information and enhanced-layer encoded information; a decoding module, adapted to decode the basic-layer encoded information, so as to obtain a left eye view picture as a reference view picture; an obtaining module, adapted to decode the enhanced-layer encoded information, so as to obtain prediction information, or the prediction information and a residual value; and a re-creating module, adapted to re-create a right eye view picture according to the left eye view picture, the prediction information, and the residual value.

In this embodiment, the basic-layer encoded information is decoded by the decoding module, so as to obtain the left eye view picture, so it is compatible with a two dimensional displaying function. Through the obtaining module and the re-creating module, the enhanced-layer encoded information is decoded to obtain the prediction information, or the prediction information and the residual value, and the right eye view picture is re-created, thereby correctly and easily re-creating the stereo view picture by utilizing the left eye view picture obtained by decoding and the re-created right eye view picture.

An embodiment of a video encoder is described as follows.

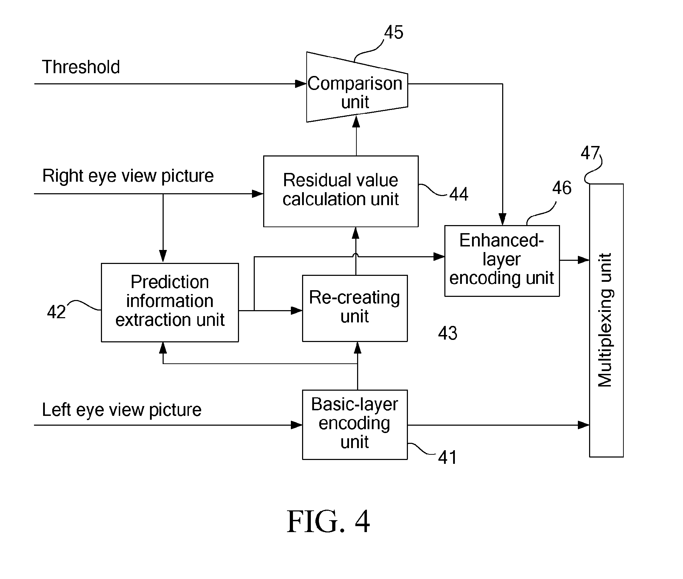

FIG. 4 is a schematic view of a video encoder according to an embodiment of the present invention. Referring to FIG. 4, the video encoder particularly includes a basic-layer encoding unit 41, adapted to basic-layer encode a left eye view picture as a reference view picture, or basic-layer encode a right eye view picture when selecting the right eye view picture as a reference view picture; a prediction information extraction unit 42, adapted to extract prediction information according to the basic-layer encoded and locally decoded left eye view picture and the right eye view picture; a re-creating unit 43, adapted to re-create the right eye view picture according to the basic-layer encoded and locally decoded left eye view picture and the prediction information; a residual value calculation unit 44, adapted to calculate a residual value according to the re-created right eye view picture and the original right eye view picture; a comparison unit 45, adapted to compare the residual value with a threshold, and output the residual value greater than the threshold; an enhanced-layer encoding unit 46, adapted to enhanced-layer encode the prediction information output from the prediction information extraction unit 42 and the residual value output from the comparison unit 45; and a multiplexing unit 47, adapted to multiplex the basic-layer encoding of the left eye video picture with the enhanced-layer encoding, so as to obtain encoded information.

In this embodiment, the left eye view picture is basic-layer encoded by the basic-layer encoding unit 41, then through the prediction information extraction unit 42, the re-creating unit 43, the residual value calculation unit 44, and the comparison unit 45, other information of a stereo video is sent to the enhanced-layer encoding unit 46 for being encoded, thereby realizing an effective compression of stereo video data, and reducing an encoding complexity For a conventional two dimensional displaying, the information output from the basic-layer encoding unit 41 is extracted, thereby correctly and easily re-creating a stereo view picture.

An embodiment of a video decoder is described as follows.

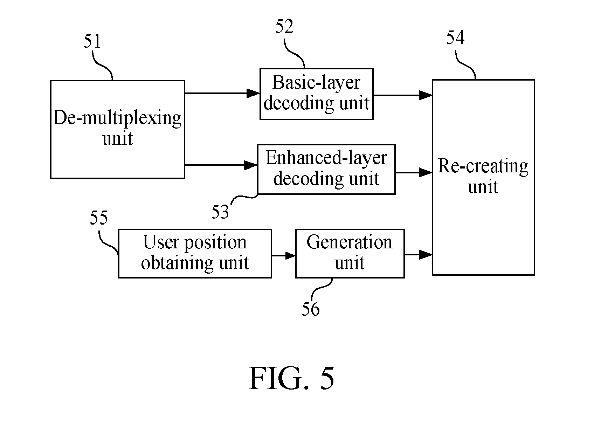

FIG. 5 is a schematic view of a video decoder according to an embodiment of the present invention. Referring to FIG. 5, the video decoder particularly includes a de-multiplexing unit 51, adapted to de-multiplex received encoded information, so as to obtain basic-layer encoded information and enhanced-layer encoded information; a basic-layer decoding unit 52, adapted to decode the basic-layer encoded information, so as to obtain a left eye view picture as a reference view picture; an enhanced-layer decoding unit 53, adapted to decode the enhanced-layer encoded information, so as to obtain prediction information, or the prediction information and a residual value; and a re-creating unit, adapted to re-create a right eye view picture according to the left eye view picture, the prediction information, and the residual value.

The video decoder of this embodiment further includes a user position obtaining unit 55, adapted to obtain distance and orientation information of a user relative to a display; and a generation unit 56, adapted to adjust the obtained prediction information correspondingly according to the distance and orientation information, and output new prediction information to the re-creating unit 54, in which the prediction information is parallax/depth information.

In this embodiment, the basic-layer encoded information is obtained by the basic-layer decoding unit 52, so it is compatible with a conventional two dimensional displaying function. The re-creating unit 54 re-creates the right eye view picture according to the information output from the basic-layer decoding unit 52 and the enhanced-layer decoding unit 53, thereby correctly and easily re-creating the stereo view picture by utilizing the left eye view picture obtained by decoding and the re-created right eye view picture. Through the user position obtaining unit 55 and the generation unit 56, the distance and orientation information of the user is compensated into the new prediction information, such that user may obtain the optimal viewing effect at any position.

Persons of ordinary skill in the art should understand that all or a part of the steps of the methods according to the embodiments of the present invention may be implemented by a program instructing relevant hardware. The program may be stored in a computer readable storage medium. When the program is run, the steps of the methods according to the embodiments of the present invention are performed. The storage medium may be any medium that is capable of storing program codes, such as a ROM, a RAM, a magnetic disk, and an optical disk.

Finally, it should be noted that the above embodiments are merely provided for describing the technical solutions of the present invention, but not intended to limit the present invention. It should be understood by persons of ordinary skill in the art that although the present invention has been described in detail with reference to the foregoing embodiments, modifications can be made to the technical solutions described in the foregoing embodiments, or equivalent replacements can be made to some technical features in the technical solutions, as long as such modifications or replacements do not cause the essence of corresponding technical solutions to depart from the spirit and scope of the present invention.

## Claims

1. A video encoding method, comprising:
basic-layer encoding a first view picture as a reference view picture, and extracting prediction information from the first view picture in combination with a second view picture;
re-creating the second view picture according to the basic-layer encoding and the prediction information;
calculating a residual value according to the re-created second view picture and the original second view picture;
simultaneously enhanced-layer encoding the residual value and the prediction information, when the residual value is greater than a threshold, otherwise, only enhanced-layer encoding the prediction information; and
obtaining encoded information by multiplexing the enhanced-layer encoding with the basic-layer encoding of the first video picture.

2. The video encoding method according to claim 1, before the basic-layer encoding the first view picture as the reference view picture, further comprising shooting the same scene from different angles, so as to obtain the first view picture and the second view picture.

3. The video encoding method according to claim 1 or 2, wherein the prediction information is parallax/depth information and/or motion vector information.

4. The video encoding method according to claim 1 or 2, wherein the basic-layer encoding and the enhanced-layer encoding are a discrete cosine transform (DCT) encoding having a motion compensation.

5. A video encoding device, comprising:
a basic-layer encoding/prediction module, adapted to basic-layer encode a first view picture as a reference view picture, and extract prediction information from the first view picture in combination with a second view picture;
a re-creating module, adapted to re-create the second view picture according to the basic-layer encoding and the prediction information;
a residual value calculation module, adapted to calculate a residual value according to the re-created second view picture and the original second view picture;
an enhanced-layer encoding module, adapted to enhanced-layer encode the prediction information, and simultaneously enhanced-layer encode the residual value and the prediction information when the residual value is greater than a threshold; and
a multiplexing module, adapted to multiplex the enhanced-layer encoding with the basic-layer encoding of the first video picture, so as to obtain encoded information.

6. A video decoding method, comprising:
de-multiplexing received encoded information, so as to obtain basic-layer encoded information and enhanced-layer encoded information;
decoding the basic-layer encoded information, so as to obtain a first view picture as a reference view picture;
decoding the enhanced-layer encoded information, so as to obtain prediction information, or the prediction information and a residual value; and
re-creating a second view picture according to the first view picture, the prediction information, and the residual value.

7. The video decoding method according to claim 6, wherein the prediction information is parallax/depth information and/or motion vector information.

8. The video decoding method according to claim 7, ;before re-creating the second view picture, the method further comprises:
obtaining distance and orientation information of a user relative to a display;
adjusting the obtained parallax/depth information correspondingly according to the distance and orientation information, so as to generate new parallax/depth information; and
re-creating the second view picture according to the first view picture, the residual value, and the new parallax/depth information.

9. The video decoding method according to claim 8, wherein the obtaining the distance and orientation information of the user relative to the display comprises obtaining the distance and orientation information of the user relative to the display by a video camera apparatus.

10. The video decoding method according to claim 8, wherein the obtaining the distance and orientation information of the user relative to the display comprises receiving the distance and orientation information of the user relative to the display sent by the user.

11. A video decoding device, comprising:
a de-multiplexing module, adapted to de-multiplex received encoded information, so as to obtain basic-layer encoded information and enhanced-layer encoded information;
a decoding module, adapted to decode the basic-layer encoded information, so as to obtain a first view picture as a reference view picture;
an obtaining module, adapted to decode the enhanced-layer encoded information, so as to obtain prediction information, or the prediction information and a residual value; and
a re-creating module, adapted to re-create a second view picture according to the first view picture, the prediction information, and the residual value.

12. A video encoder, comprising:
a basic-layer encoding unit, adapted to basic-layer encode a first view picture as a reference view picture;
a prediction information extraction unit, adapted to extract prediction information according to the basic-layer encoded and locally decoded first view picture and a second view picture;
a re-creating unit, adapted to re-create the second view picture according to the basic-layer encoded and locally decoded first view picture and the prediction information;
a residual value calculation unit, adapted to calculate a residual value according to the re-created second view picture and the original second view picture;
a comparison unit, adapted to compare the residual value with a threshold, and output the residual value greater than the threshold;
an enhanced-layer encoding unit, adapted to enhanced-layer encode the prediction information output from the prediction information extraction unit and the residual value output from the comparison unit; and
a multiplexing unit, adapted to multiplex the enhanced-layer encoding with the basic-layer encoding of the first video picture, so as to obtain encoded information.

13. A video decoder, comprising:
a de-multiplexing unit, adapted to de-multiplex received encoded information, so as to obtain basic-layer encoded information and enhanced-layer encoded information;
a basic-layer decoding unit, adapted to decode the basic-layer encoded information, so as to obtain a first view picture as a reference view picture;
an enhanced-layer decoding unit, adapted to decode the enhanced-layer encoded information, so as to obtain prediction information, or the prediction information and a residual value; and
a re-creating unit, adapted to re-create a second view picture according to the first view picture, the prediction information, and the residual value.

14. The video decoder according to claim 13, further comprising:
a user position obtaining unit, adapted to obtain distance and orientation information of a user relative to a display; and
a generation unit, adapted to adjust the obtained prediction information correspondingly according to the distance and orientation information, generate new prediction information, and output the new prediction information to the re-creating unit, wherein the prediction information is parallax/depth information.
